# EUROPÄISCHE PATENTSCHRIFT

(11) **EP 0 741 346 B1**
(45) Veröffentlichungstag und Bekanntmachung des Hinweises auf die Patenterteilung: **23.01.2002**
(21) Anmeldenummer: 96105383.2
(22) Anmeldetag: 03.04.1996
(51) Int. Cl.: G05B 19/042, G05B 19/409, G05B 19/418

(54) **Einrichtung zur Bedienung einer Maschinensteuerung, insbesondere einer Schweisssteuerung**
Control device for controlling machines, especially controlling a welder
Dispositif de commande pour commande de machines, en particulier pour une commande de soudage

(30) Priorität: 03.04.1995 US 415790
(43) Veröffentlichungstag der Anmeldung: 06.11.1996
(73) Patentinhaber: ROBERT BOSCH GMBH, 70442 Stuttgart (DE)
(72) Erfinder: Goldstein, Richard, Collinsville, CT 06022-1260 (US); Boyd Jr.,Charles, Sterling Heights, MI 48372 (US); Shaw IV , Lester, Collinsville, CT 06022-1260 (US)

(56) Entgegenhaltungen:
- EP-A- 0 369 188
- WO-A-94/22099
- DE-A- 4 412 534
- GB-A- 2 208 553
- US-A- 5 005 116
- US-A- 5 124 908
- US-A- 5 326 246

## Beschreibung

Gegenstand der vorliegenden Erfindung ist eine Vorrichtung nach des Gattung des unabhängigen Ansprüchs 1. Insbesondere betrifft die vorliegende Erfindung eine graphisch unterstützte Bedieneinrichtung zur Steuerung und Überwachung des Betriebes einer Schweißeinrichtung. Einrichtungen zur Bedienung von Maschinensteuerungen sind in großer Zahl bekannt. Die bekannten Schweißsteuerungen erfordern aber regelmäßig eine eingehende zeit- und kostenaufwendige Unterweisung der Bedienpersonen. In der Industrie besteht deshalb eine Bedarf an benutzerfreundlichen Einrichtungen zur Steuerung und Überwachung des Betriebes von Schweißanlagen.

Aus der US-A-5124908 ist eine Maschinensteuerung bekannt, die einen Mikroprozessor umfasst. Der Mikroprozessor steuert die Anzeige- und die Tastaturfunktionen. Die Anzeige ist menüspezifisch aufgebaut. Der Benutzer kann die angebotenen Menüpunkte über die Tastatur anwählen. Auf dem Bildschirm werden insbesondere solche Informationen angeboten, die sich auf den Aufbau und die Wartung der Maschine beziehen. Außerdem kann mit Hilfe eines Zentralcomputers in Verbindung mit einem Modem die Fernprogrammierung des Mikroprozessors durchgeführt werden.

Aus der US-A-5005116 ist ein grafisches Maschinenbedienfeld mit einem auf Berührung ansprechenden Bildschirm offenbart. Bei Berührung eines Parameters wird ein Verstellfeld mit Auf-/Ab-Verstellpfeilen eingeblendet. Auch kann ein Tastenfeld für die Verstellung der Maschine eingeblendet werden. Ein gewählter zu verstellender Parameter wird flackernd angezeigt.

Aus der DE-A-4412534 ist eine Vorrichtung für die Kontrolle von Schweißungen bekannt. Ein Prozessorblock weist über eine Anpassschaltung einen Anschluss eines externen, tragbaren Endgeräts auf zur manuellen Programmierung. Dieser Prozessorblock verwaltet direkt ein Anzeige-Sichtgerät, welches die Werte des gemessenen Stroms während der letzten Schweißung und eventuelle codifizierte Alarme anzeigt. Die so erfassten interessierenden Diagnosewerte können einem externen Speicher zugeführt werden, in dem auch zugehörige Benutzerprogramme über die Schweißkontrolle hinterlegt sind. Dadurch wird es möglich, auch isoliert vom Netz die Anwenderprogramme abzuarbeiten.

Aus der GB-A-2208553 ist ein Kommunikationsadapter für ein automatisiertes Fertigungssystem offenbart. Der Kommunikationsadapter stellt eine Datenverbindung über eine Benutzerschnittstelle zwischen einem tragbaren Bedienfeld, umfassend Tastatur und Anzeige, mit einer Steuerung einer Werkzeugmaschine her. Es ist jedoch nur eine Kommunikation mit der einen Werkzeugmaschine über das Bedienfeld möglich.

Es ist Aufgabe der Erfindung, eine benutzerfreundliche Einrichtung zur Bedienung einer Machinensteuerung, inssbesondere einer Schweißsteuerung anzugeben.

Diese Aufgabe wird gelöst durch eine Vorrichtung mit den Merkmalen des unabhängigen Ansprüchs 1. Eine erfindungsgemäße Bedienungseinrichtung ermöglicht auf besonders einfache Weise die Steuerung und Überwachung des Betriebes einer Schweißanlage. Die Einrichtung zeichnet sich besonders durch ein Bildschirmbedienfeld aus, über das mit Hilfe einer berührungssensitiven Tastfolie oder eines mechanischen Tastenfeldes die gesamte Bedienung der Schweißsteuerung im menügeführten Dialog durchgeführt werden kann. Dabei werden sämtliche Steuerfunktionen, wie das Rücksetzen der Verschleißzählung (stepper reset), das Weiterschalten auf die nächste Elektrode (stepper advance), das Rücksetzen von Fehlerzuständen (fault reset) usw. über die berührungssensitive Tastfolie bzw. das Tastenfeld auf dem Bedienfeld ausgeführt. Alle Eingaben des Benutzers erfolgen ebenfalls über die berührungssensitive Tastfolie oder das Tastenfeld. Das Bedienfeld gestattet in vorteilhafter Weise eine bildliche Wiedergabe von Schweißprozeßinformationen in Form von Pictogrammen, desweiteren ist sowohl eine numerische wie eine graphische Darstellung von Schweißprozeßinformationen möglich. Erfindungsgemäß wird ein Benutzer durch klare Informationen auf dem Bildschirm zu den zur Lösung einer Steuerungsaufgabe benötigten Anweisungen geführt. Die Anweisungen werden dabei einzeln nacheinander erstellt. Eine Nutzung der Einrichtung kann daher auch durch wenig erfahrene Bediener erfolgen, ohne daß diese speziell geschult werden müssen.

Das erfindungsgemäße Bedienfeld kann in Verbindung mit einem oder mehreren Schweißgeräten betrieben werden. In vorteilhafter Ausgestaltung kann es als Handgerät ausgeführt sein, welches jeweils an eines der Schweißgeräte angeschlossen wird. Alternativ kann es nach Art einer Konsole ausgeführt sein, die entweder innerhalb eines Netzwerkes von Schweißgeräten oder auch in Verbindung mit nur einem einzelnen Schweißgerät einsetzbar ist. Die vorgeschlagene Einrichtung kann ferner vorteilhaft auf bereits vorhande Schweißanordnungen nachgerüstet werden.

Es zeigen Figur 1 eine Blockdarstellung einer Schweißeinrichtung, Figur 2 eine Bedienmaske für den Bildschirm einer Schweißeinrichtung, Figuren 3-36 weitere auf dem Bildschirm darstellbare Bedienungsmasken zur Veranschaulichung der Benutzung der Bedieneinrichtung, Figuren 37A-D Zustandsdiagramme zur Veranschaulichung der Baumstruktur der Bedienmasken.

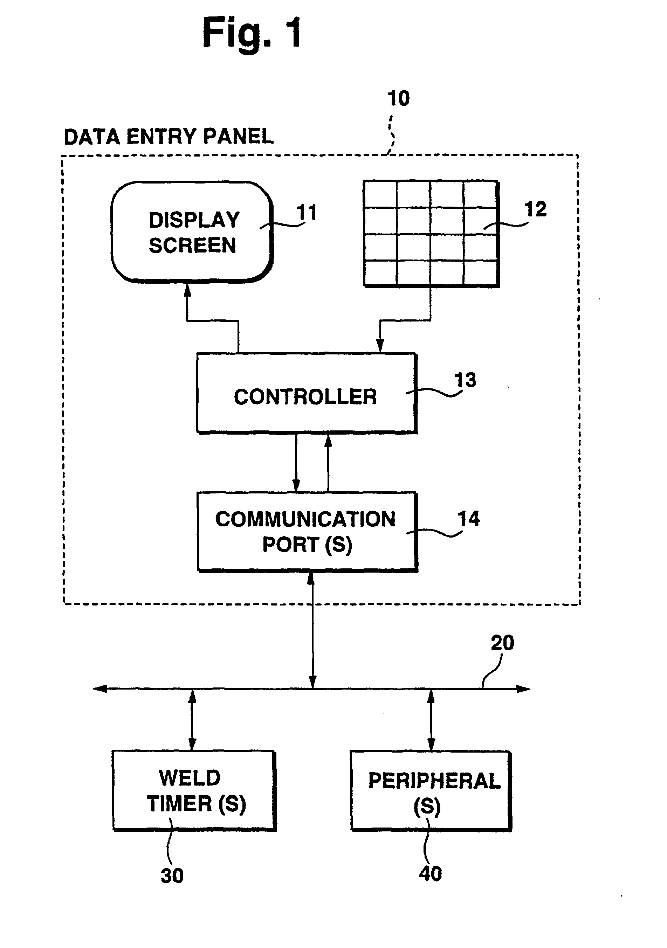

Figur 1 zeigt ein Blockdiagramm einer unter Verwendung des vorgeschlagenen Bedienfeldes ausgeführten Schweißanlage. Sie umfaßt ein Bedienfeld (Data Entry Panel) 10, das über ein Kommunikationsnetzwerk oder über einen Bus 20 mit einem oder mehreren Schweißgeräten 30 sowie gegebenenfalls mit einer oder mehreren Peripherieeinrichtungen 40, wie Stromsensoren oder Druckwandlern, verbunden ist. Das Bedienfeld 10 beinhaltet einen Bildschirm 11, eine Eingabeeinrichtung 12, eine im folgenden als Controller bezeichnete zentrale Steuereinheit 13, sowie eine oder mehrere Signalschnittstellen 14.

Der Bildschirm 11 ist zur Anzeige von alphanumerischen wie graphischen Informationen über den Schweißprozeß ausgebildet. Weiterhin dient der Bildschirm 11 zur Anzeige von Zustandsbotschaften sowie an den Bediener gerichteten Hinweisen zur Durchführung bestimmter Eingaben zu bestimmten Zeitpunkten. Der Bildschirm 11 kann unter Verwenung einer Kathodenbildröhre (CRT) eines Flüssigkristalbildschirmes (LCD), eines Elektroluminiszensbildschirmes (EL), oder dergleichen als monochromes oder als Farbgerät ausgeführt sein.

Die Eingabeeinrichtung 12 dient zur Eingabe von Daten sowie zur Auswahl von auf dem Bildschirm 11 dargestellten Optionen. Sie kann als Tastenfeld oder berührungssensitive Tastfolie realisiert sein. In letzterem Fall ist die Eingabeeinrichtung 12 dem Bildschirm 11 überlagert, wobei die Funktion jedes auf der berührungssensitiven Tastfolie dargestellten Funktionsfelder unmittelbar unterhalb des Funktionsfeldes auf dem Bildschirm 11 angezeigt wird.

Der Controller 13 versieht das Bedienfeld 10 mit Intelligenz. Er steuert den Bildschirm 11 und erhält über die Eingabeeinrichung 12 Informationen zur Aktivierung der jeweils einer Taste bzw. einem Fuktionsfeld zugeordneten Funktion. Der Controller 13 ist mit einer oder mehreren Signalschnittstellen (ports) 14 verbunden, über welche er zur Bearbeitung und/oder zur Darstellung auf dem Bildschirm 11 bestimmte Informationen erhält. In umgekehrter Richtung dienen die Signalschnittstellen 14 dem Controller 13 zur Ausgabe von Daten, welche über ein Netzwerk oder Bus 20 zur Weiterleitung an ein oder mehrere an das Netzwerk bzw. den Bus angeschlossene Schweißgeräte 30 bzw. Peripherieeinrichtungen 40 bestimmt sind. Typischerweise ist der Controller 13 unter Verwendung eines Mikrocomputers realisiert.

Über die Signalschnittstellen 14 ist das Bedienfeld 10 an das Kommunikationsnetzwerk bzw. den Bus 20 angeschlossen, und kann mit anderen gleichfalls daran angeschlossenen Schweißgeräten 30 und/oder Peripherieeinrichtungen 40 kommunizieren. Die Signalschnittstellen 14 sind zweckmäßig als *RS-232, RS-422, PROFIBUS, ETHERNET,* oder ähnliche bekannte Protokolle unterstützende Schnittstelle ausgeführt. Neben der in Figur 1 wiedergegebenen Ausführung, wo das Bedienfeld 10 über ein Netzwerk/Bus 20 mit den Schweißgeräten 30 bzw. den Peripherieeinrichtungen 40 verbunden ist, kann ein Bedienfeld 10 über die Signalschnittstellen 14 auch direkt mit einem Schweißgerät 30 verbunden sein, etwa über ein serielles Kommunikationsprotokoll.

Für die nachfolgende Beschreibuhg wird davon ausgegangen, daß die Eingabeeinrichtung 12 als in Betätigungsfelder unterteilte berührungssensitive Tastfolie realisiert ist, wobei die Funktion eines Betätigungsfeldes jeweils unmittelbar unterhalb des Feldes auf dem Bildschirm 11 dargestellt ist. Alternativ können selbstverständlich mechanische Codetasten eingesetzt werden, welche in einem Tastenfeld angeordnet sind.

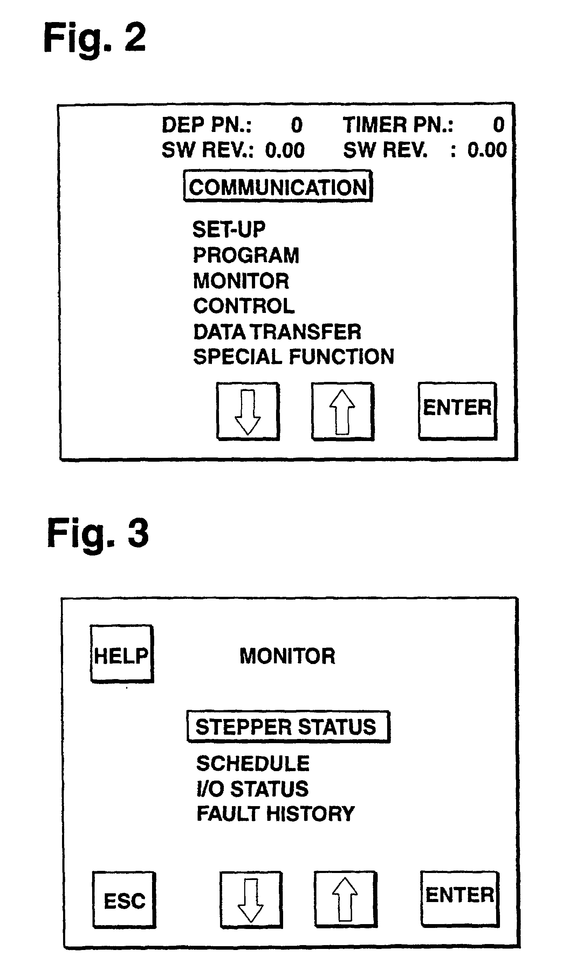

Das Bedienfeld 10 ist zur Steuerung einer Vielzahl verschiedener Funktionen bei die Steuerung einer Schweißanlage vorgesehen. Der Zugriff auf die verschiedenen Funktionen wird durch eine in Menütechnik aufgebaute Bildschirmgraphik, den Masken, unterstützt. Die zum Menü der höchsten Stufe, dem Hauptmenü gehörende Maske, ist in Figur 2 wiedergegeben. Sie zeigt eine Liste von Funktionen, welche durch einen Benutzer wählbar sind. Der Benutzer wählt eine Funktion, indem er durch Berühren eines zu der Maske gehörenden Betätigungsfeldes in Form eines Aufwärts- bzw. Abwärtspfeiles einen Cursor auf dem Bildschirm 11 verschiebt.

Befindet sich der Cursor über einer gewünschten Funktion, wählt der Bediener diese Funktion durch Drücken des nachfolgend als ENTER-Taste bezeichneten, Eingabebestätigungsfeldes aus. Im Hauptmenü kann der Bediener zwischen folgenden, auf dem Bildschirm dargestellten Funktionen oder Moden wählen: KOMMUNIKATION (COMMUNICATION), SET-UP, PROGRAMM (PROGRAM), ÜBERWACHUNG (MONITOR), STEUERN (CONTROL), DATENÜBERTRAGUNG (DATA TRANSFER), sowie SPEZIELLE FUNKTIONEN (SPECIAL FUNCTION).

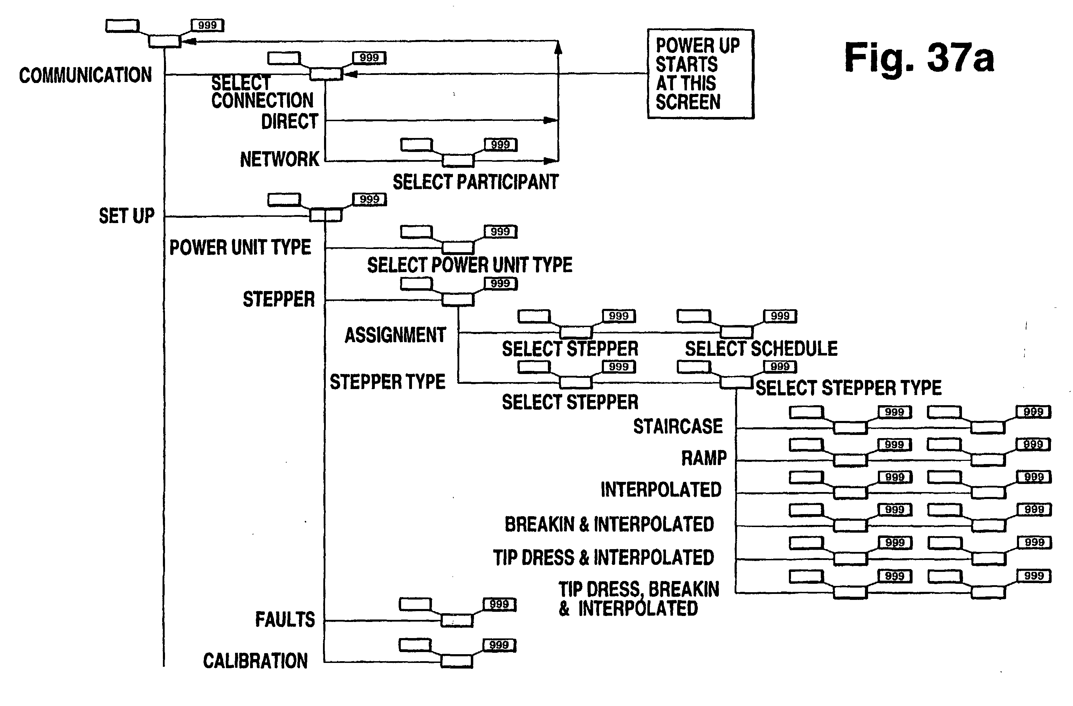

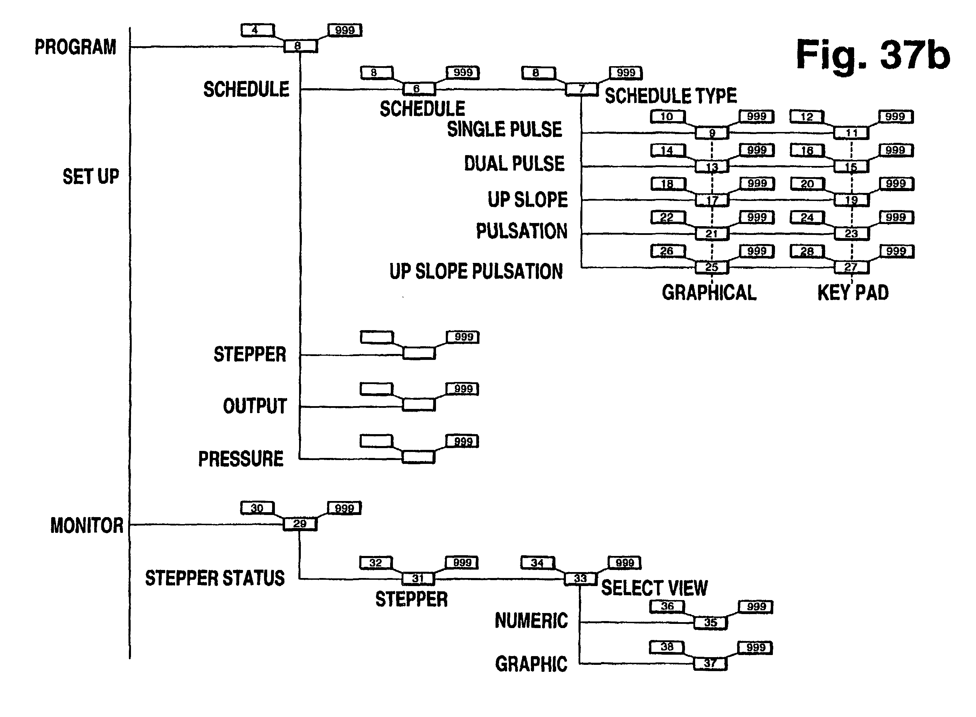

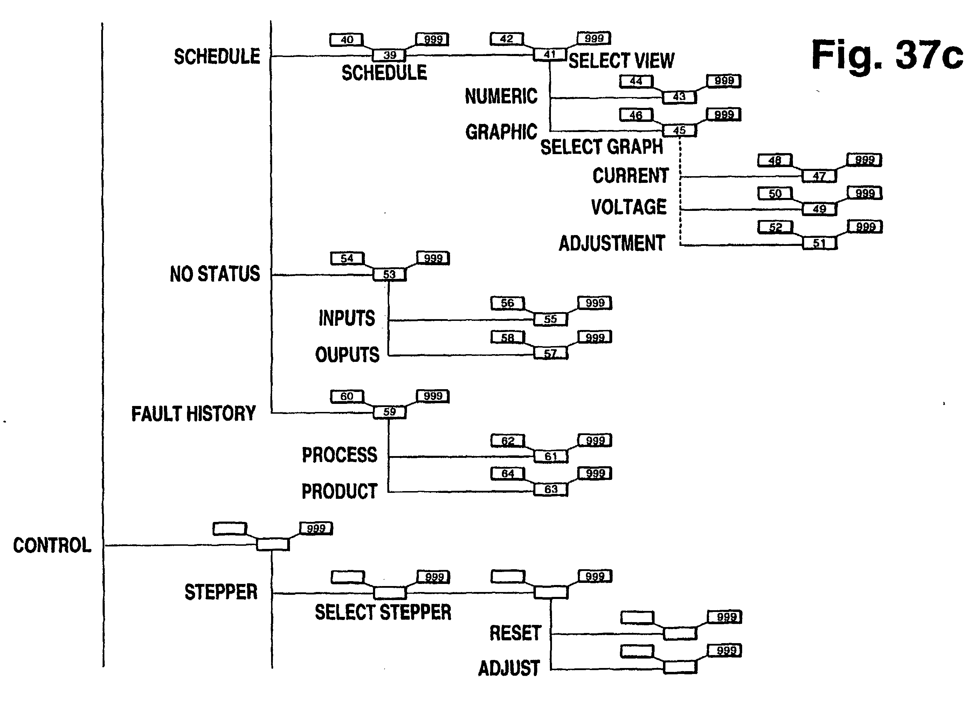

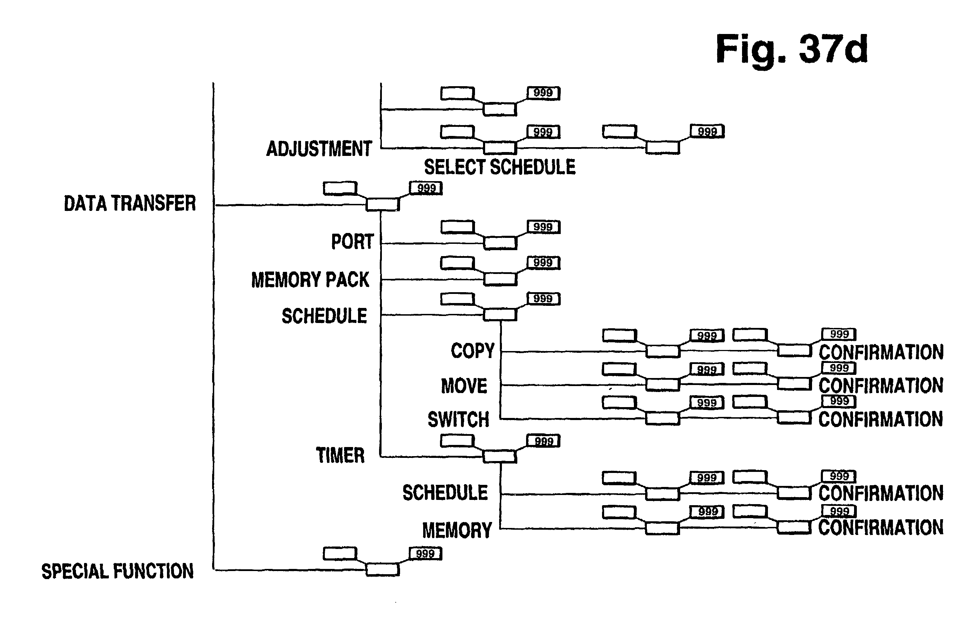

Die Funktion KOMMUNIKATION erlaubt es einem Benutzer, einen Kommunikationsmodus für das Bedienfeld 10 auszuwählen. Die Auswahl des Kommunikationsmodus erfolgt nach dem Einschalten der Anlage sowie wahlweise zu einem beliebigen anderen Zeitpunkt durch Betätigen der Funktion KOMMUNIKATION über die Tastfolie. Dem Bedienfeld 10 ist mitzuteilen, welches Kommunikationsprotokoll benutzt werden soll. In der Regel erfolgt deshalb unmittelbar nach dem Einschalten der Anlage, bevor das Hauptmenü aufgerufen wird, eine - nur im Zustandsdiagramm Figur 37 A angedeutete - Darstellung einer Kommunikationssteuerungsmaske. Ist das Bedienfeld 10 an ein Netzwerk angeschlossen, wie dem *PROFIBUS, ETHERNET,* oder ähnliche, zeigt das Menü eine Liste mit den weiteren Teilnehmern des Netzwerkes und fordert den Benutzer auf, eine Auswahl zu treffen, welche Einrichtung er über das Bedienfeld 10 steuern möchte. Nachdem der zu steuerne Teilnehmer ausgewählt ist, fährt das Bedienfeld 10 mit dem in Figur 2 wiedergegebenen Hauptmenü fort. Zu jeder Zeit kann anschließend der Benutzer wieder in den Modus KOMMUNIKATION eintreten und einen anderen Netzwerkteilnehmer auswählen, mit dem er über das Bedienfeld 10 kommunizieren möchte.

In bevorzugter Ausführung kann das Bedienfeld 10 auf verschiedene Weise mit einem Schweißgerät 30 kommunizieren. Das Bedienfeld 10 kann wahlweise direkt mit einem Schweißgerät 30 verbunden sein, etwa über eine serielle Verbindung. In einer anderen Ausführung ist das Bedienfeld 10 Teil eines Netzwerkes und kann darüber mit einem Schweißgerät 30 und/oder weiteren dem Netzwerk zugehörigen Einrichtungen 40 kommunizieren.

Zweckmäßig ist das Bedienfeld 10 ferner in der Weise vorprogrammiert, daß es, wenn es direkt mit einem Schweißgerät 30 verbunden ist, die Direktverbindung automatisch erkennt, die Wiedergabe der Kommunikationssteuerungsmaske darufhin umgeht, und den Betrieb direkt mit der in Figur 2 dargestellten Hauptmenü beginnt.

Der Modus SET-UP erlaubt es dem Benutzer, eine Reihe von Einstellungen betreffend die Hardware- und die Softwarekonfiguration vorzunehmen, wie z. B.: Auswählen des Typs der Leistungseinheit, Anlegen von Stepper-Nachstelltafeln, welche die Schweißstromnachführung in Abhängigkeit vom Elektrodenverschleiß festlegen, Zuordnen von Stepper-Nachstelltafeln zu Elektroden, Setzen von Fehlergrenzwerten, z. B. Minimum, Maximum, Alarme oder ähnliches, Kalibrieren von Perepherieeinrichtungen wie Stromsensoren, Druckwandlern oder dergleichen.

Der Modus PROGRAMM erlaubt es einem Bediener Schweißprogramme, Stepper-Nachstelltafeln, programmierbare Ausgänge oder Andruckwerte für die Schweißzangen vorzugeben.

Der Modus ÜBERWACHUNG eröffnet einem Bediener die Möglichkeit der visuellen Sichtbarmachung der Abläufe in der Schweißanlage. So kann der Status der Elektroden numerisch oder graphisch angezeigt werden. Ebenso können statistische Zahlen zu den Schweißabläufen numerisch oder graphisch wiedergegeben werden. Weiterhin können die Zustände von Ein- und Ausgängen dargestellt werden. Ferner lassen sich während des Schweißprozeßes aufgetretene oder die Systemhardware betreffende Fehler in der Reihenfolge ihres zeitlichen Auftretens anzeigen.

Der Modus STEUERN erlaubt es einem Bediener eine laufende Schweißpunktzählung für eine beliebige Stepper-Nachstelltafel zurückzusetzen oder zu korrigieren. Ebenso können Fehlermeldungen zurückgesetzt werden. Weiterhin beinhaltet der Steuerungsmodus die Möglichkeit, die "Wärme" für einen beliebigen Schweißablauf zu korrigieren, um so ein Basisprogramm für eine Elektrode, ein Werkstück oder eine andere Prozeßunregelmäßigkeit zu optimieren, ohne ein spezielles neues Programm erstellen zu müssen.

Die Funktion DATENÜBERTRAGUNG ermöglicht die Übertragung von Programminformationen zu und von verschiedenen Einrichtungen. Wahlmöglichkeiten für Ausgang, Speicherbaustein und Schweißgerät (Programm+Speicher(insgesamt)) erlauben es, Programminhalte an verschiedene Einrichtungen zu senden, oder von diesen zu erhalten. Von besonderer Bedeutung ist die Funktion, wenn Schweißgeräte in einem Netzwerk als Arbeitszellen verbunden sind, und mehrere oder alle Einheiten dasselbe Programm oder denselben Satz von Programmen abarbeiten. Mit Hilfe der Funktion DATENÜBERTRAGUNG kann in diesem Fall zunächst ein einzelnes Schweißgerät programmiert, und die Information anschließend an alle anderen Teilnehmer übertragen werden, die dieselben Programme benötigen. Durch diese Möglichkeit reduziert sich die Wahrscheinlichkeit einer fehlerhaften Eingabe sowie die Zeit zur Programmierung der Zellen erheblich. Der Datenübertragungsmodus beinhaltet ferner Programmanagementfunktionen, die in einem Schweißgerät das Kopieren, das Verschieben oder das Umschalten von Programmabläufen erlauben.

Der Modus SPEZIELLE FUNKTIONEN beinhaltet solche Funktionen, welche den anderen Moden nicht sinnvoll zugeordnet werden können. Unter anderem ermöglicht der Modus SPEZIELLE FUNKTIONEN die Auswahl der jeweils verwendeten Sprache bei mehrsprachig ausgeführten Einrichtungen. Auch kann im Modus SPEZIELELE FUNKTIONEN das Standardkommunikationsprotokoll festgelegt werden, wie *PROFIBUS, ETHERNET* oder ähnliche. Weiterhin können spezielle Handhabungsfunktionen im Zusammenhang mit Roboteranwenungen vorgesehen sein.

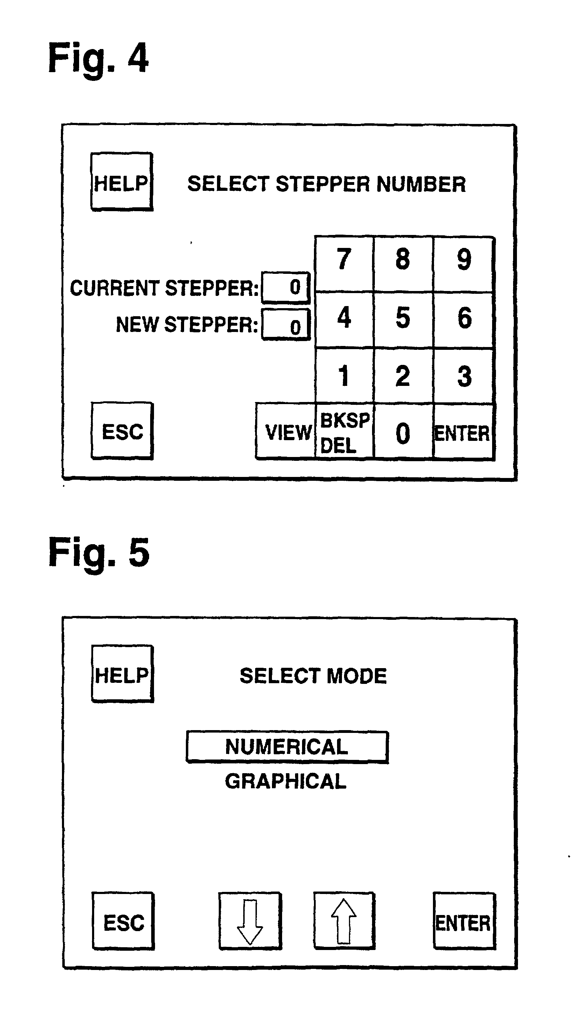

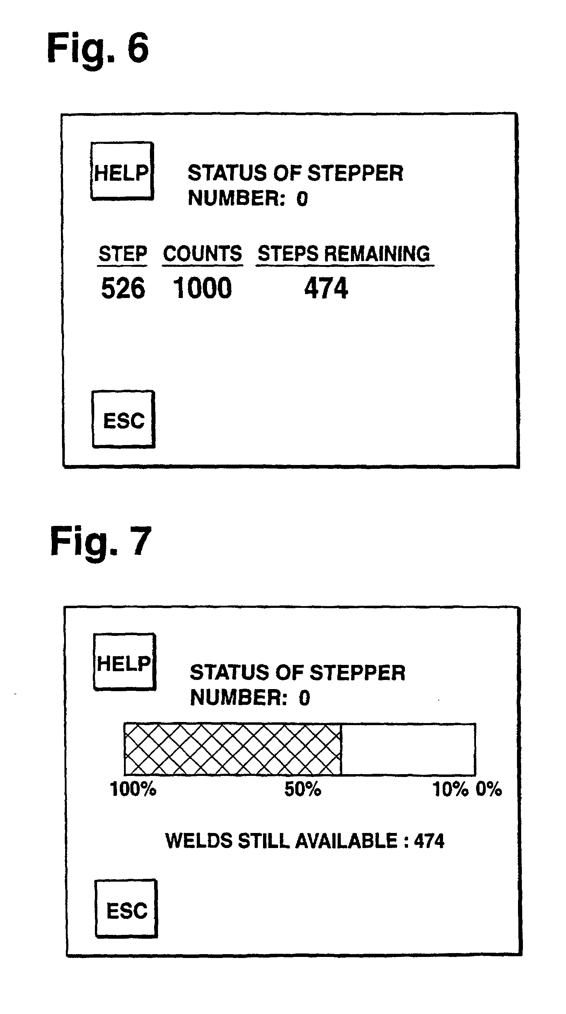

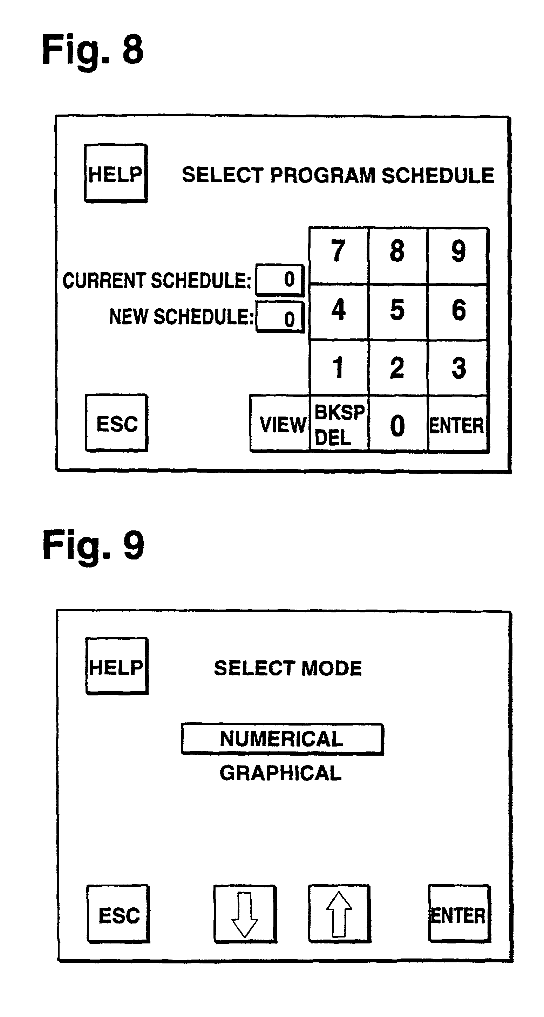

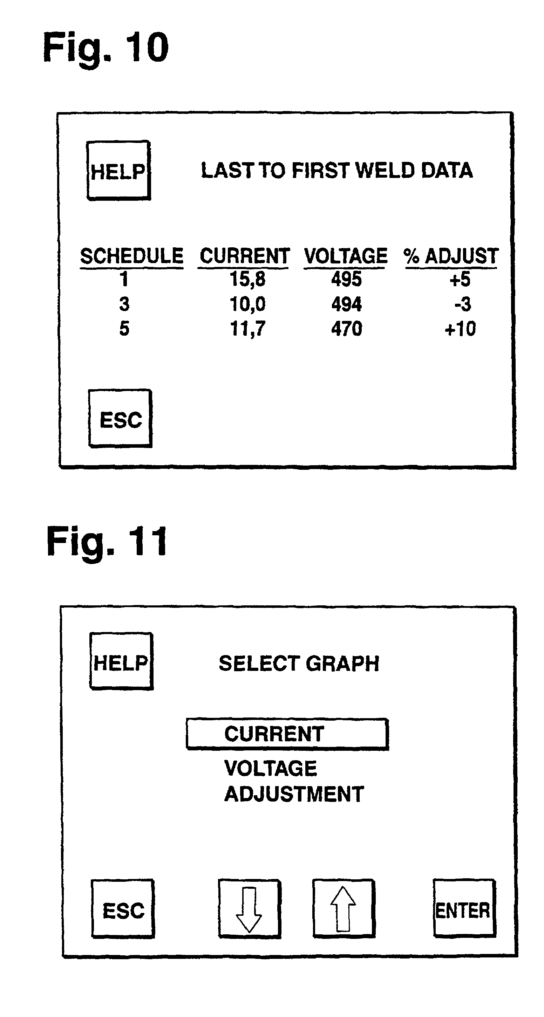

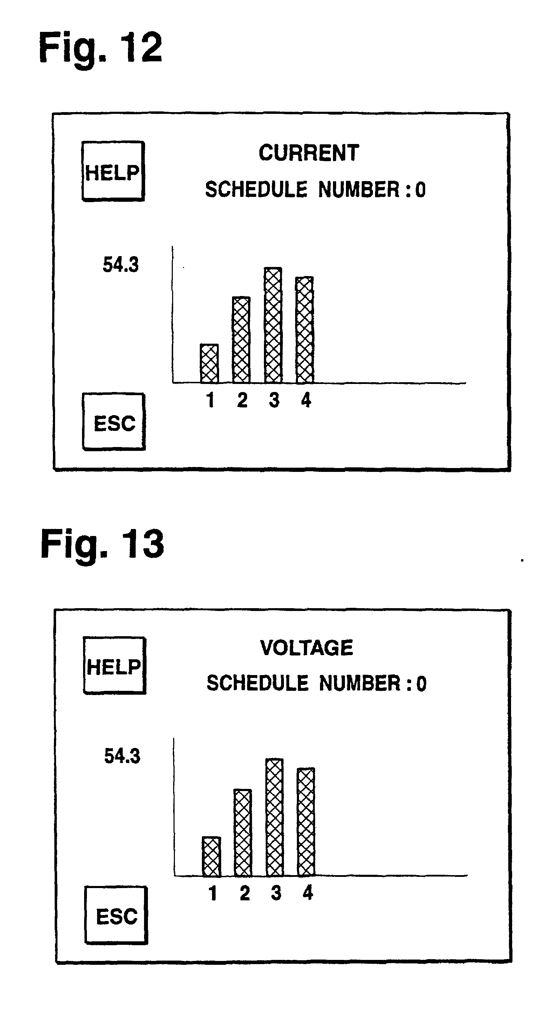

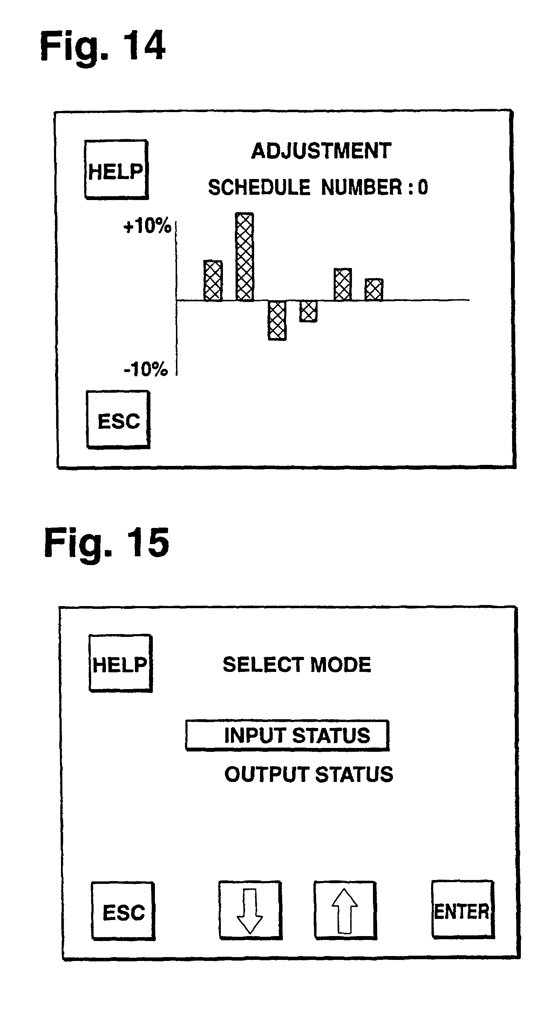

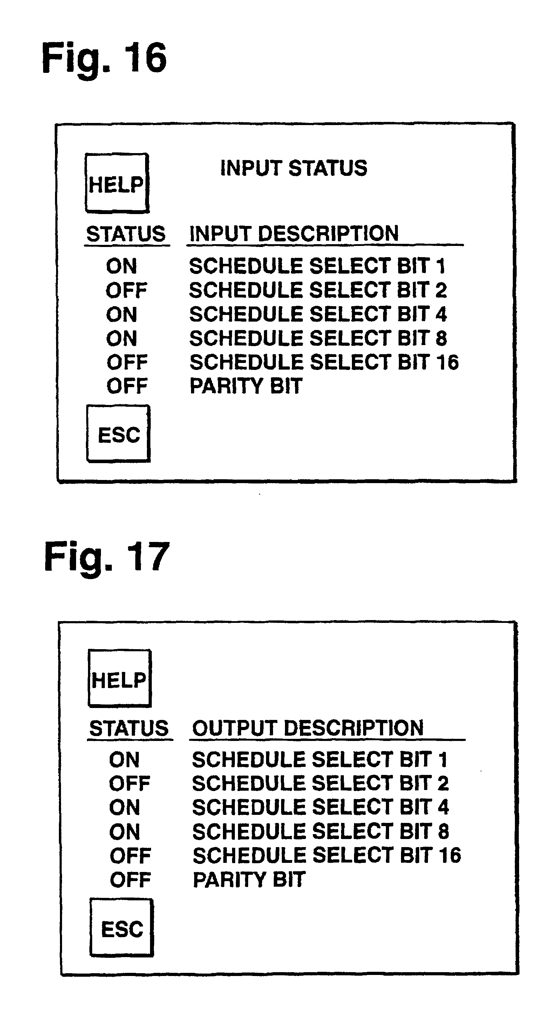

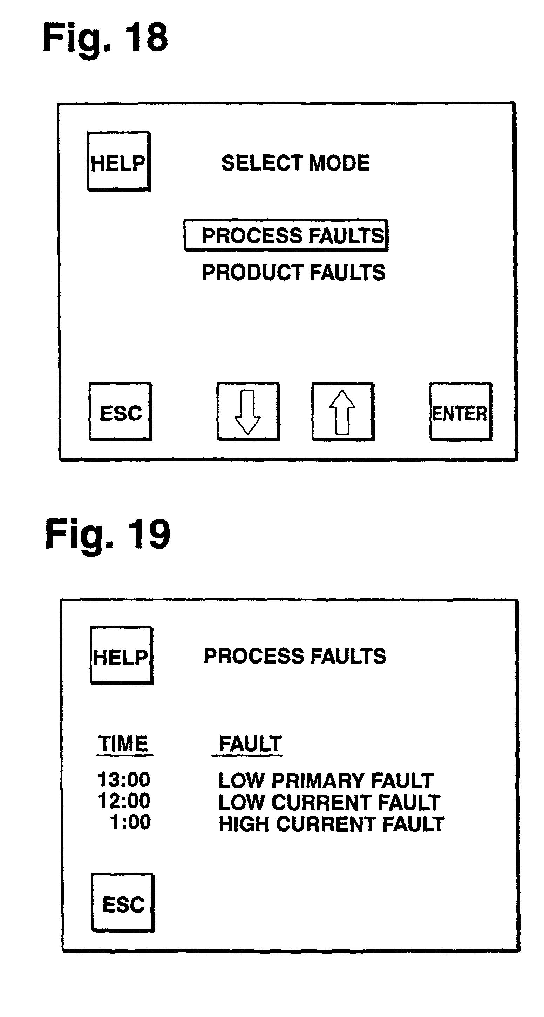

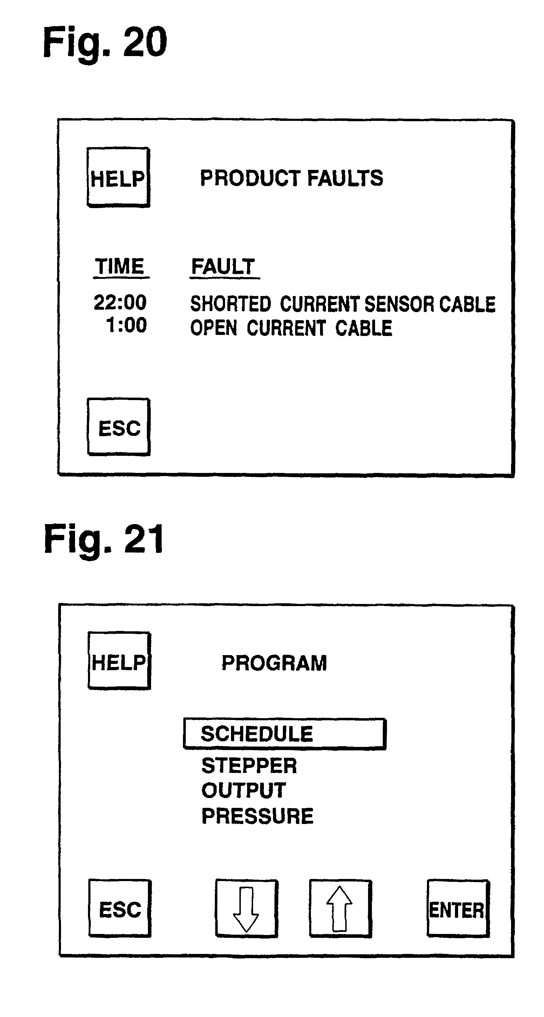

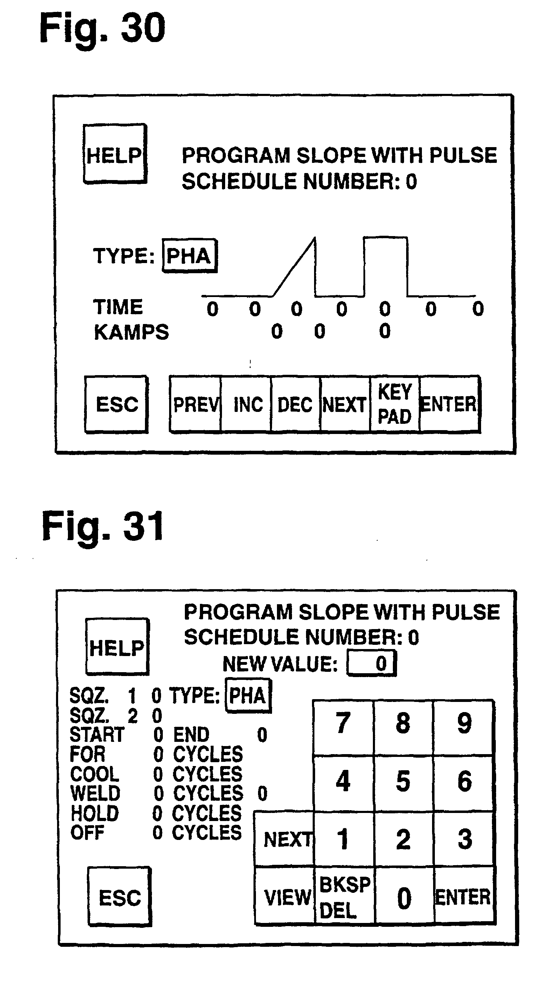

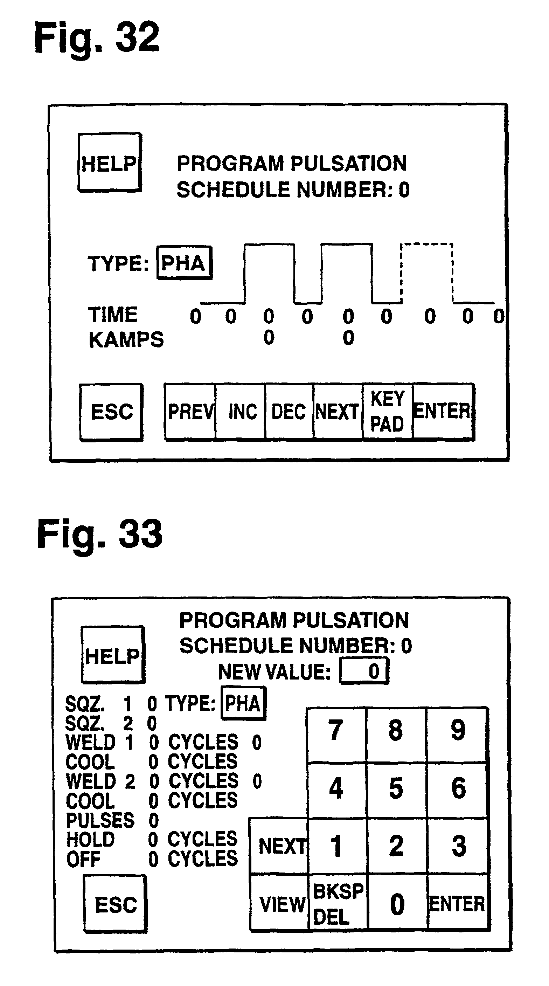

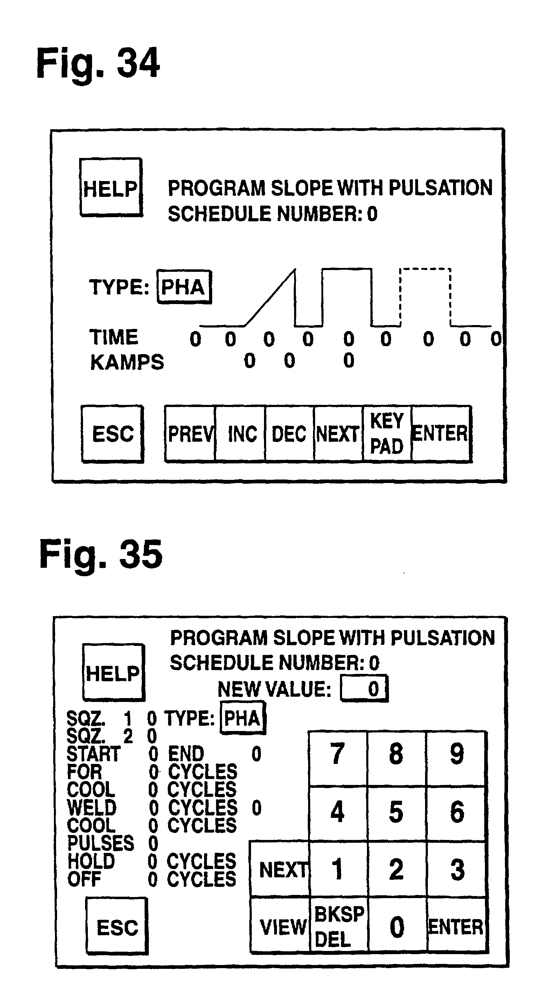

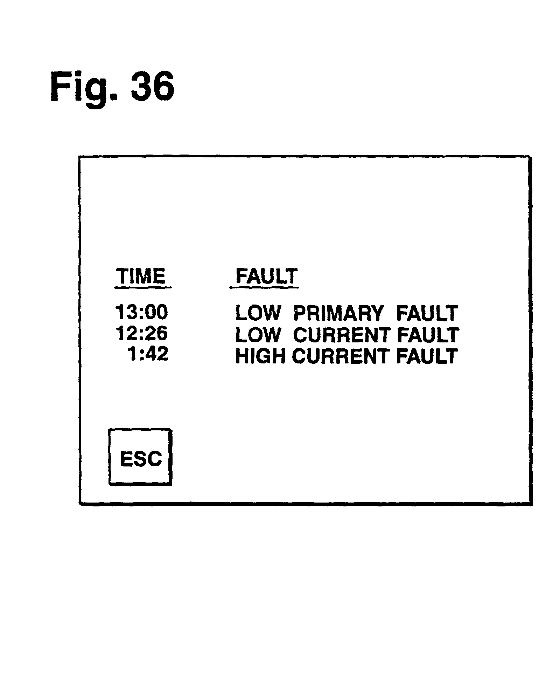

Die Figuren 3-36 zeigen Beispiele für auf dem Bedienfeld darstellbare Bildschirmmasken. Die in den Figuren 3-20 wiedergegebenen Masken betreffen dabei den Modus ÜBERWACHUNG, die in den Figuren 21-35 gezeigten Masken den Modus PROGRAMM. Figur 36 zeigt den Modus FEHLER, welcher in jedem beliebigen anderen Modus veranlaßt werden kann. Allen in den Figuren 3-36 wiedergegebenen Masken ist jeweils eine Maskennummer zugeordnet, anhand derer nachfolgend auf sie Bezug genommen wird. Die Figuren 37A-D zeigen Zustandsdiagramme, welche veranschaulichen, wie die Masken gemäß den Figuren 2-36 in Reaktion auf Eingaben durch einen Bediener gezeigt werden; die Masken sind anhand ihrer Maskennummer wiedergegeben. Aus Gründen der Übersichtlichkeit sind in den Zustandsdiagrammen Figuren 37A-D nicht vollständig alle, sondern nur die in den Figuren 3-36 gezeigten Masken dargestellt. Zu jedem Ast sind weiterhin Bezeichnungen der zugehörigen Funktionen oder Moden eingetragen.

Im Zustandsdiagramm 37 A-D sind jeder Maske zwei andere Masken zugeordnet und zwar:
1. eine kontextspezifische HILFE(HELP)-Maske, welche jeweils links oberhalb der Maskenbox dargestellt ist, sowie
2. eine Fehlermaske, hier Maske Nr. 999, welche jeweils rechts oberhalb der Maskenbox wiedergegeben ist.

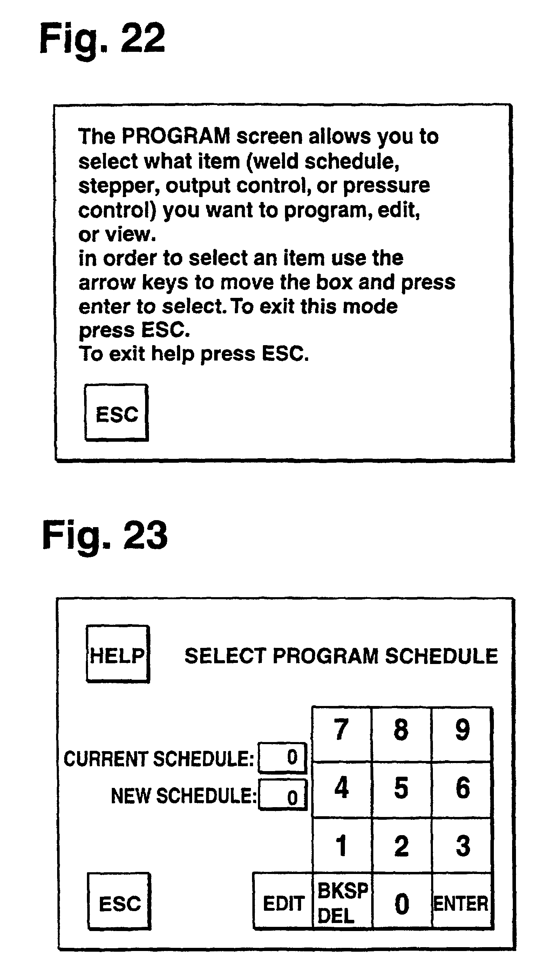

Wie aus den Figuren 3-35 ersichtlich ist, enthalten alle Masken ein HILFE(HELP)-Funktionsfeld in der oberen linken Ecke. Betätigt der Benutzer die berührungssensitive Tastfolie 12 auf dem HILFE-Feld, reagiert das Bedienfeld 10 durch Darstellung der jeweils zugehörigen HILFE-Maske. Der Inhalt der HILFE-Maske hängt dabei vom Inhalt derjenigen Maske ab, von der aus die HILFE-Maske aufgerufen wurde. Figur 22 zeigt eine HILFE-Maske, die aufgerufen wird, wenn das HILFE-Feld aus der in Figur 21 wiedergegebenen Maske heraus betätigt wurde.

Die FEHLER(FAULT)-Maske ist eine Systemmaske, die ebenfalls aus jeder beliebigen Maske heraus aufrufbar ist. Sobald im System ein Fehler auftritt, wird in der rechten oberen Ecke des Bildschirms ein flackerndes FEHLER-Berührungsfeld dargestellt, unabhängig davon, welche Maske zu diesem Zeitpunkt gerade dargestellt ist. Betätigen des FEHLER-Feldes ruft die Maske FEHLER auf, welche genaue Angaben zum zugrundeliegenden Fehler enthält. Figur 36 zeigt eine FEHLER-Maske mit einer Gruppe von Fehlerzuständen und dem jeweiligen Zeitpunkt ihres Auftretens.

Um ein gleichbleibendes Erscheinungsbild zu erhalten, wurden den vier Ecken des Bildschirmes 11 bzw. der berührungssensitiven Tastfolie 12 in allen Masken jeweils dieselben Funktionen wie folgt zugeordnet:
1. In der linken oberen Ecke der Befehl HILFE, mittels dessen eine Maske mit jeweils geeigneten Hilfsinformationen aufrufbar ist;
2. In der rechten oberen Ecke ein FEHLER-Feld, das im Falle des Auftretens eines Fehlers dargestellt wird, und mittels dessen eine Fehlermaske anzeigbar ist;
3. In der linken unteren Ecke ein ESCAPE-Feld, mittels dessen zur jeweils vorigen Maske zurückgekehrt werden kann; sowie
4. In der unteren rechten Ecke ein EINGABEBESTÄTIGUNGS (ENTER)-Feld, das betätigt wird, um Daten zu bestätigen oder eine Auswahl zu treffen.

Einige Masken, wie die in Figur 3 wiedergegebene Maske Nr. 29 oder die in Figur 2 gezeigte Maske Nr. 1 beinhalten mehrere Menüelemente. Jeweils eines davon ist dann von einem Hervorhebungskasten umgeben, der mit Hilfe von im unteren Bildschirmbereich dargestellten Pfeilfeldern entlang der Menüelementliste abwärts und aufwärts bewegt werden kann. Sobald sich so das gewünschte Menüelement im Hervorhebungskasten befindet, kann durch Betätigen der ENTER-Taste die zugehörige Aktion ausgelöst werden.

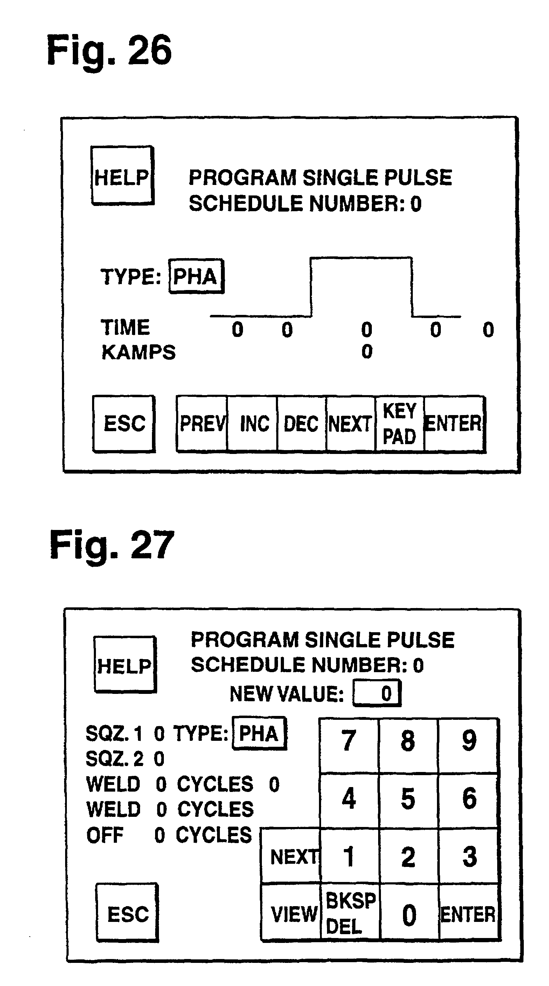

Einige Masken, wie die in Figur 23 gezeigte Maske Nr. 5, erlauben eine numerische Eingabe. Solche numerische Dateneingaben erlaubende Masken zeigen einen aktuellen Wert eines Parameters sowie einen Freiplatz, worin mittels einer auf der Maske dargestellten numerischen Tastatur ein neuer Wert eingebbar ist. Betätigen der ENTER-Taste ordnet der zugrundeliegenden Variablen den neuen Wert zu und zeigt ihn in dem Freiplatz an. In Masken, die eine Eingabe von mehreren numerischen Werten vorsehen, wie die Maske Nr. 11 in Figur 27, wird die jeweils gerade einzugebende Variable mit Hilfe eines Hervorhebungskastens festgelegt, der mittels hierfür vorgesehener Eingabefelder NEXT und PREV verschiebbar ist. Die jeweils im Hervorhebungskasten befindliche Variable kann wie vorstehend verändert werden.

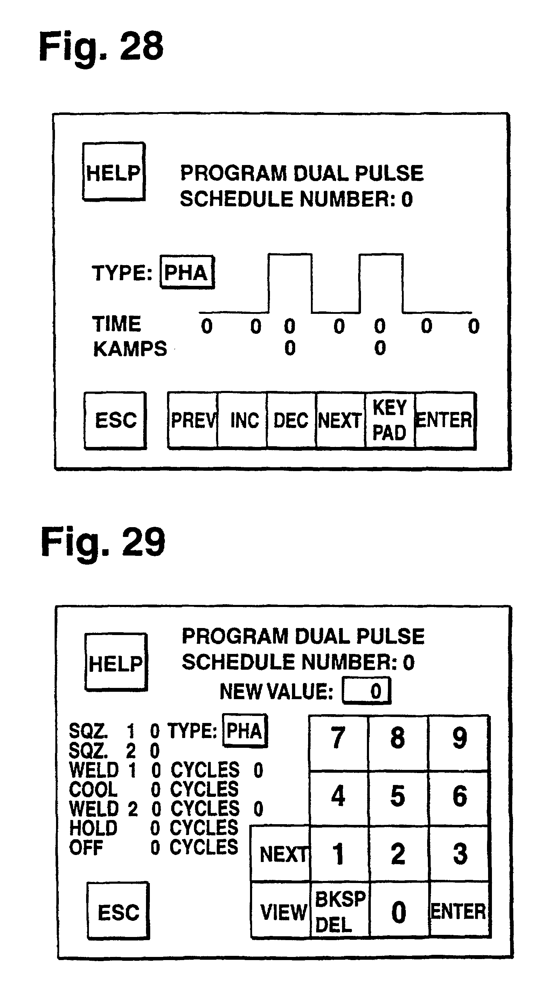

In Masken mit graphischen Anzeigen, wie die in Figur 28 wiedergegebene Maske Nr. 13 aus dem Modus PROGRAMM, bewegen ebenfalls mit NEXT und PREV bezeichnete Eingabefelder einen Hervorhebungskasten auf ein gewünschtes Element. Das jeweils in der Hervorhebungskasten befindliche Element kann dann mit Hilfe zweier hierfür vorgesehener Eingabefelder verändert werden, wovon das erste, mit INC bezeichnete den im Hervorhebungskasten befindlichen Wert um ein Inkrement je Feldbetätigung erhöht, das zweite, mit DEC bezeichnete den jeweils im Hervorhebungskasten befindlichen Wert um ein Inkrement verringert. Diese Möglichkeit der Programmierung eignet sich insbesondere zur Feinabstimmung eines Programmes. Der numerische Eingabemodus wird vorzugsweise zur Programmerstellung verwendet.

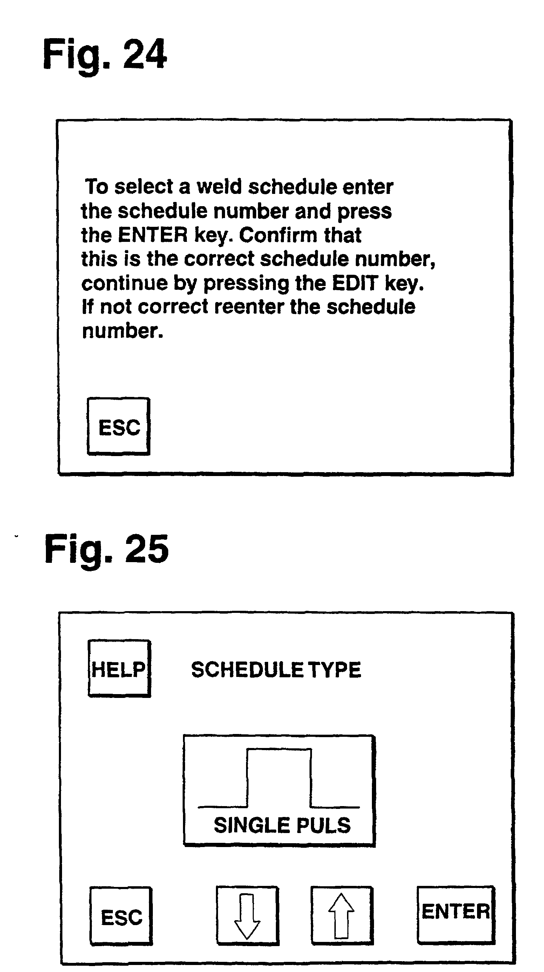

In einigen Masken, wie die in Figur 25 gezeigte Maske Nr. 7, wird eine Graphik auf dem Bildschirm wiedergegeben. Durch Betätigen von Aufwärts- bzw. Abwärtspfeilfeldern wird die Graphik durch eine Folge von Auswahlmöglichkeiten durchgeschaltet. Die Bedienungstechnik entspricht in ihrer Funktion der Verwendung eines Hervorhebungskastens in Verbindung mit textlichen Wiedergaben von Elementen, wie sie vorstehend beschrieben wurde, ersetzt aber die textliche Hervorhebung durch eine graphische Wiedergabe der Auswahlmöglichkeiten.

## Patentansprüche

1. Einrichtung zum Bedienen und zur Überwachung des Betriebs einer Maschine, umfassend
- einen Bildschirm (11) zum Darstellen von graphischen und alphanumerischen Informationen betreffend die Funktion der Maschine (30),
- eine Dateneingabeeinrichtung (12) zum Eingeben von Daten und Anweisungen betreffend die Funktion der Maschine (30), wobei die jeweils für eine Eingabe zur Auswahl stehenden Daten und/oder Anweisungen auf dem Bildschirm (11) dargestellt werden,
- eine zur logischen Verarbeitung digitaler Signale befähigte zentrale Steuereinheit (13) zur Steuerung der Anzeigen auf dem Bildschirm (11) sowie zur Umsetzung der über die Dateneingabeeinrichtung (12) eingegebenen Daten und/oder Anweisungen in für die Maschine (30) geeignete Informationen, **gekennzeichnet durch**
- eine Signalschnittstelle (14) zum Herstellen einer Kommunikationsverbindung mit der Maschine (30), um darüber Programminformationen betreffend die Funktion der Maschine mit jener auszutauschen,
- wobei die Maschine (30) ein Schweißgerät einschließt,
- die Dateneingabeeinrichtung (12) zur Eingabe von Daten betreffend zumindest die Funktion Datenübertragung dient, wobei die Funktion Datenübertragung die Übertragung von Programminformationen zu und von verschiedenen Einrichtungen ermöglicht,
- der Bildschirm (11) Informationen in Bezug auf zumindest die Funktion Datenübertragung anzeigt,
- das Bedienfeld (10) über die Signalschnittstelle (14) an ein Kommunikationsnetzwerk (20) angeschlossen ist und mit anderen gleichfalls daran angeschlossenen Schweißgeräten (30) und/oder Peripherieeinrichtungen (40) kommunizieren kann.

2. Einrichtung nach Anspruch 1, **dadurch gekennzeichnet, daß** die Dateneingabeeinrichtung (12) eine dem Bildschirm (11) überlagerte berührungssensitive Tastfolie (12) ist.

3. Einrichtung nach Anspruch 1, **dadurch gekennzeichnet, daß** auf dem Bildschirm (11) vorab festgelegte, in Menütechnik gestaltete Masken dargestellt werden.

4. Einrichtung nach Anspruch 1, **dadurch gekennzeichnet, daß** der Bildschirm (11) Informationen in Bezug auf wenigstens eine der Funktionen SET-UP, Programmierung, Überwachung, Steuerung oder spezielle Funktionen anzeigt.

5. Einrichtung nach Anspruch 1, **dadurch gekennzeichnet, daß** die Eingabeeinrichtung (12) zur Eingabe von Daten betreffend zumindest eine der Funktionen Kommunikation, SET-UP, Programmierung, Überwachung, Steuerung oder spezielle Funktionen dient.

## Claims

1. Device for controlling and monitoring the operation of a machine, comprising
- a screen (11) for displaying graphical and alphanumeric information relating to the function of the machine (30),
- a data input device (12) for inputting data and instructions relating to the function of the machine (30), with the respective choice of data and/or instructions available for input being displayed on the screen (11),
- a central processor unit (13), capable of logically processing digital signals, for controlling the displays on the screen (11) and also for converting the data and/or instructions input using the data input device (12) into information suitable for the machine (30), **characterized by**
- a signal interface (14) for setting up a communication link to the machine (30) in order to use said communication link to exchange program information relating to the function of the machine with said machine,
- where the machine (30) encompasses a welding appliance,
- the data input device (12) is used for inputting data relating to at least the data transmission function, the data transmission function permitting program information to be transmitted to and from various devices,
- the screen (11) displays information concerning at least the data transmission function,
- the control panel (10) is connected to a communication network (20) via the signal interface (14) and can communicate with other welding appliances (30) and/or peripheral devices (40) which are likewise connected to said communication network.

2. Device according to Claim 1, **characterized in that** the data input device (12) is a touch-sensitive touch membrane (12) superposed on the screen (11).

3. Device according to Claim 1, **characterized in that** the screen (11) displays predefined masks formed using a menu technique.

4. Device according to Claim 1, **characterized in that** the screen (11) displays information concerning at least one of the functions SET-UP, programming, monitoring, control or special functions.

5. Device according to Claim 1, **characterized in that** the input device (12) is used for inputting data relating to at least one of the functions communication, SET-UP, programming, monitoring, control or special functions.

## Revendications

1. Installation pour commander et surveiller le fonctionnement d'une machine comprenant :
- un écran image (11) pour afficher des informations graphiques et alphanumériques concernant le fonctionnement de la machine (30),
- une installation d'entrée de données (12) pour introduire les données et les instructions concernant le fonctionnement de la machine (30), l'écran image (11) affichant chaque fois les données et/ou informations à sélectionner pour les entrer,
- une unité de commande (13), centrale, pour le traitement logique de signaux numériques, pour commander les affichages sur l'écran image (11) et pour convertir les données et/ou indications introduites par l'installation d'entrée de données (12) en informations appropriées à la machine (30),
**caractérisée par**
- une interface de signal (14) pour établir une liaison de communication avec la machine (30), pour échanger des informations de programme concernant le fonctionnement de la machine,
- la machine (30) comprenant un appareil à souder,
- l'installation d'entrée de données (12) servant à introduire les données concernant au moins la fonction de transmission de données, cette fonction de transmission de données permettant le transfert d'informations de programme vers et à partir de différentes installations,
- l'écran image (11) affichant des informations concernant au moins la fonction de transmission de données,
- le champ de service (10) étant relié à un réseau de communication (20) par l'interface de signal (14) et pouvant communiquer avec d'autres appareils à souder (30) le cas échéant raccordés et/ou des périphériques (40).

2. Installation selon la revendication 1,
**caractérisée en ce que**
l'installation d'entrée de données (12) est une feuille tactile (12) sensible appliquée sur l'écran image (11).

3. Installation selon la revendication 1,
**caractérisée en ce que**
l'écran image (11) affiche des masques conçus en technique de menus, fixés au préalable.

4. Installation selon la revendication 1,
**caractérisée en ce que**
l'écran image (11) affiche des informations concernant au moins l'une des fonctions mise à jour, programmation, surveillance, commande ou fonctions spéciales.

5. Installation selon la revendication 1,
**caractérisée en ce que**
l'installation d'entrée de données (12) sert à l'entrée de données concernant au moins l'une des fonctions communication, mise à jour, programmation, surveillance, commande ou fonctions spéciales.
